# EUROPÄISCHE PATENTSCHRIFT

(11) **EP 2 492 137 B1**
(45) Veröffentlichungstag und Bekanntmachung des Hinweises auf die Patenterteilung: **22.04.2020**
(21) Anmeldenummer: 12001124.2
(22) Anmeldetag: 20.02.2012
(51) Int. Cl.: B60N 2/00, B60N 2/70, B60N 2/90

(54) **Belegungserfassungseinrichtung zum Detektieren des Belegungszustandes eines Kraftfahrzeugsitzes**
Occupation detection device for detecting whether a motor vehicle seat is occupied
Moyen détecteur d'occupation destiné à détecter l'état d'occupation d'un siège de véhicule automobile

(30) Priorität: 24.02.2011 DE 202011003188 U; 28.03.2011 DE 202011004482 U; 12.04.2011 DE 202011005145 U
(43) Veröffentlichungstag der Anmeldung: 29.08.2012
(73) Patentinhaber: I.G. Bauerhin GmbH, 63584 Gründau (DE)
(72) Erfinder: Michelmann, Jochen, 63571 Gelnhausen (DE)
(74) Vertreter: Grimm, Ekkehard

(56) Entgegenhaltungen:
- EP-A1- 1 413 863
- EP-A1- 1 634 516
- WO-A1-2008/043536
- WO-A1-2010/014110
- DE-A1-102007 056 374
- US-A1- 2006 087 164

## Beschreibung

Die vorliegende Erfindung betrifft eine Belegungserfassungseinrichtung gemäß dem Oberbegriff des Anspruchs 1.

### Stand der Technik

Belegungserfassungseinrichtungen werden insbesondere in die Sitze von Kraftfahrzeugen aus Gründen der aktiven und passiven Sicherheit der Fahrzeuginsassen eingebaut. Solche der Sitzbelegungserkennung dienende Einrichtungen sind heutzutage Standard in allen Neufahrzeugen. Die Sitzbelegungserkennung dient unter anderem dazu, den Fahrzeuginsassen darauf hinzuweisen, einen Sicherheitsgurt anzulegen; dabei ist zu unterscheiden, ob der Sitz tatsächlich durch eine Person belegt ist oder ob auf dem Sitz nur Gegenstände abgelegt sind.

Eine Art einer solchen Belegungserfassungseinrichtung umfasst eine Vielzahl von druckempfindlichen Sensorzellen, die zwischen Bezug und Schaumkern angebracht sind. Solche Sensorzellen können als Foliendrucksensoren mit zwei übereinander liegenden und mittels Abstandsmaterial auf Abstand gehaltenen Folien ausgeführt sein.

Belegungserfassungseinrichtungen werden üblicherweise im hinteren, mittleren Bereich zwischen Bezug und Polsterkern angeordnet und können somit den durch eine Person auf den Polsterkern über die Sitzfläche ausgeübten Druck erfassen.

Ist der entsprechende Sitz mit einer Sitzheizung ausgestattet, kann der Sitzbelegungssensor Bestandteil einer Sitzheizung, die sich unmittelbar auf dem Polsterkern befindet, sein.

Es ist auch bekannt, dass solche Foliendrucksensoren in den Polsterkern integriert werden. Weiterhin ist es bekannt, solche Foliendrucksensoren auf einer Trägerplatte anzuordnen, welche an der Tragestruktur eines Sitzes befestigt sind. Hierbei wird die auf den Sensor einwirkende Kraft durch den darüberliegenden Polsterkern ausgeübt.

Aus der DE 42 37 072 C1 ist bekannt, dass der Sitzbelegungssensor zwischen einem Sitzbezug und einer darunter liegenden Gummihaarmatte oder innerhalb der Gummihaarmatte oder zwischen der Gummihaarmatte und einem Federrahmen des Sitzes oder unmittelbar oberhalb einer Sitzschale angeordnet werden kann.

Aus der DE 197 52 976 A1 ist eine Sitzerfassungsvorrichtung bekannt, die einen folienförmigen, druckempfindlichen Schalter aufweist, der in ein Sitzpolster eingebettet ist. Hierzu ist das Sitzpolster mit einer Aussparung versehen, die ein unterhalb einer Sitzoberfläche angeordnete Deckenoberseite hat und sich in eine der Sitzoberfläche gegenüberliegende Richtung öffnet, wobei in der Aussparung der druckempfindliche Schalter enthalten ist.

Die EP 1 251 027 B1 beschreibt einen Sitz mit einem Sitzbelegungssensor, der ein Polster mit einem Weichpolster und einem drucksensitiven Sensor umfasst, wobei das Polster mit einem Hohlraum versehen ist, der unterhalb der der Sitzoberfläche gegenüberliegenden Seite des Polsters aufwärts in Richtung Sitzfläche ausgebildet ist, wobei ein Weichteil in diesen Hohlraum so eingesetzt werden kann, dass das Polster das Weichteil in diesem Hohlraum haltend umfasst, um damit ein Herausfallen des Weichteils zu verhindern. Dadurch befindet sich der Sensor zwischen der oberen Fläche des Weichteils und der Deckenunterschicht des Hohlraums.

Eine wesentliche Forderung an solche Belegungserfassungseinrichtungen ist diejenige, dass sie positionsgenau in den Sitz eingebaut werden müssen und dass diese Position im Betrieb des Fahrzeugs beibehalten werden muss, damit eine ortsabhängige Detektion gewährleistet ist.

Anordnungen, wie sie vorstehend in der DE 42 37 072 C1 beschrieben sind, haben den Nachteil, dass die Struktur der Sitzoberfläche, wie zum Beispiel Gräben und Abspannungen, die Positionierung an geeigneter Stelle schwierig macht und die elektrische Verbindung über Gräben hinweg die Lebensdauer begrenzen kann. Ein weiterer Nachteil ist die mit einem Foliensensor unweigerlich verbundene, reduzierte Atmungsaktivität des Sitzes.

Um eine Detektion über eine möglichst große Fläche zu erhalten, müssen verhältnismäßig viele Sensorzellen auf dem Schaumkern platziert werden.

Anordnungen nach der DE 197 52 976 A1 positionieren die Sensorzellen tiefer im Polsterkern. Hierdurch sind die Probleme, wie sie vorstehend beschrieben sind, zwar verbessert, jedoch haben die durch den Herstellungsprozess des Polsterkerns hervorgerufenen Dichteschwankungen große Schwankungen auf die Detektionsempfindlichkeit zur Folge.

### Aufgabe

Der vorliegenden Erfindung liegt nun die Aufgabe zugrunde, eine Belegungserfassungseinrichtung zum Detektieren des Belegungszustands eines Sitzes zu schaffen, die von der Materialstruktur des Polsterkerns eines Sitzes unempfindlich ist und somit eine geringe Schwankungsbandbreite der Detektionsempfindlichkeit aufweist.

Die vorliegende Aufgabe wird durch eine Belegungserfassungseinrichtung mit den Merkmalen des Anspruchs 1 gelöst.

Vorteilhafte Ausgestaltungen der Belegungserfassungseinrichtung ergeben sich aus den abhängigen Ansprüchen.

Erfindungsgemäß weist eine Belegungserfassungseinrichtung, zum Detektieren des Belegungszustandes eines Kraftfahrzeugsitzes, alle die Merkmale des Anspruchs 1 auf. In einer Aussparung ist an der einem Sitzenden abgewandten Unterseite des Polsterkerns angeordnet. Diese Aussparung weist eine Bodenfläche mit einer Größe auf, die mindestens der Größe des Drucksensors bzw. des Foliendrucksensors entspricht. Durch eine Lagerplatte wird der Drucksensor abgedeckt gehalten. Die Erfindung besteht nun darin, dass zwischen der Bodenfläche der Aussparung und dem Drucksensor mindestens eine Zwischenlage eingelegt ist, die aus einem reversibel verformbaren und im Wesentlichen homogen strukturierten Material besteht, und die an ihren Rändern vom eigentlichen Polsterkern entkoppelt ist. Mit dieser Zwischenlage wird erreicht, dass ein Schaumkörper im Hinblick auf sowohl dessen Material selbst, als auch dessen Oberflächenstruktur, ohne Einschränkungen einzusetzen ist. Mit dieser Zwischenlage wird die Druckeinleitung vom Polsterkern auf den Sensor gleichmäßig verteilt, so dass Stauchhärteschwankungen und Fehlstellen, wie Lunker oder Einschlüsse, das Detektionsverhalten kaum beeinträchtigen. Dadurch ist die Funktion des mechanischen Drucksensors auch bei inhomogenen Polsterstrukturen sichergestellt. Im Fall von Schaumstoff bedeutet dies, dass eine gleichmäßige Porenverteilung und eine gleichmäßige Porengröße im Schaumstoffmaterial der Zwischenlage vorliegen muss.

Das bevorzugte Material ist Zellkautschuk, Polyetherschaum oder bevorzugt Polyesterschaum, da solche Materialien, gleichmäßig ohne Einschlüsse oder Lunker, geschäumt oder gespritzt werden können. Durch Vorkomprimieren der bevorzugten Materialien können die Eigenschaften noch weiter verbessert werden.

Es hat sich gezeigt, dass eine Mindestdicke von 2 mm bei großen Stauchhärten der Zwischenlage bereits zu guten Ergebnissen führt. Eine Zwischenlage mit mehr als 20 mm kann bei Polsterkernen bereits zur Beeinträchtigung der Haltbarkeit des Polsterkerns führen.

Die Stauchhärte der mindestens einen Zwischenlage sollte höher als diejenige des Polsterkerns sein. Dadurch wird die Kraft in die Zellen des Sensorelementes gerichtet eingeleitet, da umliegende Teile des Polsterkerns leichter nachgeben und ein größerer Kraftanteil auf den Sensorzellen liegt.

Die mindestens eine Zwischenlage liegt vorzugsweise waagerecht oder parallel zur Bodenfläche der Aussparung und ist dort senkrecht zur Bodenfläche frei beweglich, so dass die Zwischenlage bei einer auf der Polsteroberfläche einwirkenden Belastung jeder Bewegung in der Aussparung folgen kann.

Die Stauchhärte der mindestens einen Zwischenlage weist einen Gradienten in Richtung senkrecht zur Bodenfläche auf, der von der Seite des Drucksensors zur Seite der Bodenfläche hin zunimmt.

Über die Stauchhärte kann eine Anpassung der Detektionsempfindlichkeit der Sensorzellen des Foliendrucksensors erfolgen.

In einer Ausgestaltung ist zwischen der Bodenfläche der Aussparung und der mindestens ersten Zwischenlage eine weitere, zweite Zwischenlage eingelegt, die es ermöglicht, Kräfte, die auf Polsteroberfläche die durch einen Sitzenden aufgebracht werden, unabhängig von dessen Sitzhaltungen auf die Sensorzelle übertragen.

Die zweite Zwischenlage besteht aus einem Kunststoffmaterial, vorzugsweise aus einem formstabilen Kunststoff, der bei Belastung der Polsteroberfläche durch einen Sitzenden unabhängig von dessen Sitzhaltung und Sitzposition eine Fokussierung und eine entsprechende Weiterleitung der Druckkräfte an die darunter liegenden Komponenten, an die erste Zwischenlage und den Drucksensor, gewährleistet ist.

In einer Ausgestaltung weist die Stauchhärte der Zwischenschicht von der dem Drucksensor zugewandten Seite zu der Seite der Bodenfläche der Aussparung hin ein linear oder quadratisch ansteigendes Verhalten auf.

Damit der Drucksensor entsprechend detektieren und auslösen kann, muss eine Gegendruckfläche unterhalb des Drucksensors angebracht sein, die als Lagerplatte bezeichnet ist. Diese Lagerplatte kann aus einem Kunststoff mit hoher Biegesteifigkeit bestehen, um so ein Gegendrucklager für den eigentlichen Sensor zu schaffen.

Entweder ist diese Lagerplatte im Randbereich mit dem Polsterkern oder aber mittels Clipsen oder Rastteilen mit dem Rahmen oder mit am Rahmen angebrachten Federn verbunden.

Vorzugsweise sind in dieser Lagerplatte Löcher eingebracht, in die sich Befestigungselemente verankern oder einhaken, die ihrerseits am Polsterkern befestigbar sind.

Als Befestigungselemente sind Schaumdübel, Druckknöpfe, Haken, Clipse, Rastteile oder Ösen zu verwenden.

Vorzugsweise ist die Lagerplatte mit dem Drucksensor verbunden, wobei die Zwischenlagen mit dem Drucksensor mittels doppelseitigen Klebebands verbunden sind.

Anordnungen nach der DE 197 52 976 A1 positionieren die Sensorzellen tiefer im Polsterkern. Hierdurch sind die Probleme, wie sie vorstehend beschrieben sind, zwar verbessert, jedoch haben die durch den Herstellungsprozess des Polsterkerns hervorgerufenen Dichteschwankungen große Schwankungen auf die Detektionsempfindlichkeit zur Folge.

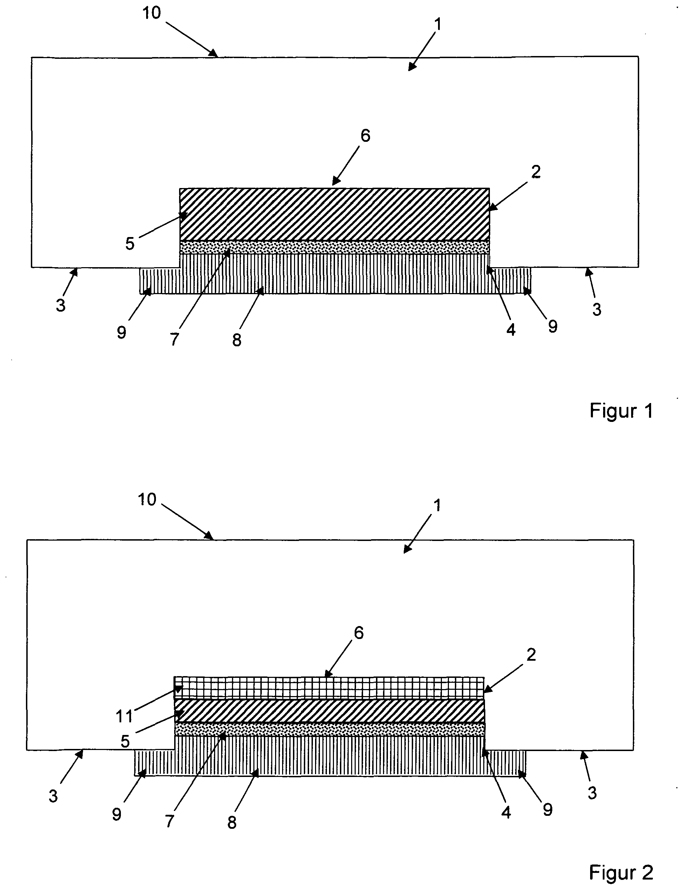

Die DE 10 2007 056 374 A1 beschreibt eine Belegungserfassungseinrichtung für einen Sitz, die als Sitzbelegungserkennung bezeichnet wird. Der Sitz, wie er in den Figuren 1 und 2 dargestellt ist, umfasst ein Sitzkissen, das in ein erstes Schaumteil und ein zweites Schaumteil unterteilt ist. Weiterhin ist eine Airbag-Steuerung vorgesehen, die nur dann ausgelöst werden soll, wenn ein bestimmter Fahrzeugsitz besetzt ist. Als Ansteuerelement für die Airbag-Steuerung wird ein so genannter "Bladder" eingesetzt, also eine Blase, die mit einem Fluid gefüllt ist, die über das Fluid ein Drucksignal erzeugt, wenn eine Kraft auf den Bladder ausgeübt wird. Der Bladder ist in eine Aussparung eingesetzt, die eine dem Bladder entsprechende Kontur besitzt. Das zweite Schaumteil des aus dem ersten Schaumteil und dem zweiten Schaumteil zusammengesetzten Sitzkissens weist eine Aussparung auf. Es ist aufgrund der Figur 2 offensichtlich, dass die Aussparung in dem zweiten Schaumteil durch das erste Schaumteil abgedeckt ist und in die Aussparung der nicht dargestellte Bladder (Fluidblase) eingebettet ist.

Die EP 1 634 516 A1, die nächstliegender Stand der Technik betrachtet, beschreibt einen geschäumten Sitz mit einem folienartigen druckempfindlichen Sensor zum Erfassen einer auf einem Sitz sitzenden Person. Ein Stützelement ist integral mit einer Bodenfläche des Sitzes ausgebildet. Der Sensor ist zwischen Bodenfläche des Sitzes und einem starren, plattenartigen Element, das durch ein Schäumungsformverfahren gebildet ist, integriert. Mittels eines Urethanschaums, der bei dem Schäumungsformverfahren eingesetzt wird, werden das Stützelement, der Sensor und die Platte fest mit dem Sitzkissen verbunden, so dass diese Teile fest in das Sitzkissen eingeschäumt sind.

### Aufgabe

Der vorliegenden Erfindung liegt nun die Aufgabe zugrunde, eine Belegungserfassungseinrichtung.zum Detektieren des Belegungszustands eines Sitzes zu schaffen, die von der Materialstruktur des Polsterkerns eines Sitzes unempfindlich ist und somit eine geringe Schwankungsbandbreite der Detektionsempfindlichkeit aufweist.

Die vorliegende Aufgabe wird durch eine Belegungserfassungseinrichtung mit den Merkmalen des Anspruchs 1 gelöst.

Vorteilhafte Ausgestaltungen der Belegungserfassungseinrichtung ergeben sich aus den abhängigen Ansprüchen.

Erfindungsgemäß weist eine Belegungserfassungseinrichtung, zum Detektieren des Belegungszustandes eines Kraftfahrzeugsitzes, einen Polsterkern und einen Foliendrucksensor, bei dem es sich um einen mechanischen Drucksensor handelt, auf. In einer Aussparung ist an der einem Sitzenden abgewandten Unterseite des Polsterkerns angeordnet. Diese Aussparung weist eine Bodenfläche mit einer Größe auf, die mindestens der Größe des Drucksensors bzw. des Foliendrucksensors entspricht. Durch eine Lagerplatte wird der Drucksensor abgedeckt gehalten. Die Erfindung besteht nun darin, dass zwischen der Bodenfläche der Aussparung und dem Drucksensor mindestens eine Zwischenlage eingelegt ist, die aus einem reversibel verformbaren und im Wesentlichen homogen strukturierten Material besteht. Mit dieser Zwischenlage wird erreicht, dass ein Schaumkörper im Hinblick auf sowohl dessen Material selbst, als auch dessen Oberflächenstruktur, ohne Einschränkungen einzusetzen ist. Mit dieser Zwischenlage wird die Druckeinleitung vom Polsterkern auf den Sensor gleichmäßig verteilt, so dass Stauchhärteschwankungen und Fehlstellen, wie Lunker oder Einschlüsse, das Detektionsverhaiten kaum beeinträchtigen. Dadurch ist die Dämmschicht und die Reaktionsschicht entsprechend hergestellt und sind formschlüssig miteinander verbunden. Die Vorteile dieser Herstellungsvarianten sind günstigere Herstellungskosten und eine Reduzierung der Einzelkomponenten. Die unterschiedlichen Materialien können auch in einem Spritzvorgang gespritzt werden, so dass die zwei Materiallagen materialschlüssig miteinander verbunden sind.

In die Dämmschicht können Löcher eingebracht werden, in die sich Befestigungselemente verankern oder einhaken, die ihrerseits am Polsterkern befestigbar sind.

Als Befestigungselemente sind Dübel, Druckknöpfe, Haken, Clipse, Rastteile oder Ösen zu verwenden, die an der Dämmschicht befestigt werden.

Vorzugsweise sind diese Befestigungselemente bereits mit der Dämmschicht umspritzt oder eingespritzt.

Weitere Einzelheiten und Merkmale der Erfindung ergeben sich aus der Zeichnung. In der Zeichnung zeigen
- Figur 1: eine Schnittdarstellung eines Teils eines Polsterkerns mit einer Aussparung, in die eine Zwischenlage, der Drucksensor und die Lagerplatte eingesetzt sind,
- Figur 2: eine weitere Schnittzeichnung eines Teils eines Polsterkerns, die mit derjenigen der Figur 1 vergleichbar ist, mit einer Aussparung, in die, gegenüber der Darstellung in Figur 1, zwei Zwischenlagen, der Drucksensor und die Lagerplatte eingesetzt sind,
- Figur 3: eine Belegungserfassungseinrichtung ohne Polsterkern in einer Draufsicht,
- Figur 4: eine Schnittzeichnung entlang der Schnittlinie A-A in Figur 3 mit einer Aussparung, in der eine Zwischenlage, ein Sensor, eine Reaktionsschicht, eine Lagerplatte und eine zusätzliche Dämmschicht angebracht sind,
- Figur 5: eine Explosionsdarstellung der Belegungserfassungseinrichtung ohne Polsterkern,
- Figur 6: eine Seitenansicht der Lagerplatte mit eingelassenen Verbindungskanälen, der Reaktionsschicht und der Dämmschicht, und
- Figur 7: eine Seitenansicht der Lagerplatte mit Kunststoffstegen mit Hinterschneidung für die Befestigung der Dämmschicht.

Es ist darauf hinzuweisen, dass zu einzelnen Bauteilen, die in den Figuren mit denselben Bezugszeichen bezeichnet sind, die Ausführungen zu einer Figur entsprechend auf die Bauteile der anderen Figuren übertragen werden können, ohne dass hierauf gesondert hingewiesen ist.

Die Figur 1 zeigt schematisch einen Teil eines Polsterkerns 1, der beispielsweise in den Sitz eines Kraftfahrzeugs integriert ist.

An der Unterseite dieses Polsterkerns 1 befindet sich eine Aussparung 2, die zu der Unterseite 3 des Polsterkerns 1 hin offen (Öffnung 4) ist. In die Aussparung 2 ist über die Öffnung 4 eine erste Zwischenlage 5 eingefügt, die auf der Bodenfläche 6 der Aussparung 2 aufliegt.

Auf der der Bodenfläche 6 der Aussparung 2 abgewandten Seite der ersten Zwischenlage 5 ist ein Drucksensor 7 aufgelegt, bei dem es sich bevorzugt um einen Foliendrucksensor handelt. Die Größe des Drucksensors 7 entspricht in etwa der Größe der Bodenfläche 6 der Aussparung 2.

An die der ersten Zwischenlage 5 abgewandten Seite des Drucksensors bzw. des Foliendrucksensors 7 legt sich eine Lagerplatte 8 an, die somit den Drucksensor 7 abdeckt und hält. Diese Lagerplatte 8 besitzt an ihrem Außenumfang zwei Flanschabschnitte 9, die sich an die Unterseite 3 des Polsterkerns anlegen. Diese Flanschteile 9 der Lagerplatte 8 sind mit der Unterseite 3 des Polsterkerns 1 verbunden.

Wenn auf die Oberseite des Polsterkerns 1, die mit dem Bezugszeichen 10 bezeichnet ist, durch eine Person ein Druck ausgeübt wird, wodurch sich der Polsterkern 1 zusammendrückt, wird dieser Druck auf die erste Zwischenlage 5 übertragen, die den Druck weiter auf den Drucksensor 7 überträgt. Hierzu ist die Zwischenlage 5 frei bewegbar in die Aussparung 2 eingelegt. Durch die Zwischenlage 5, die vorzugsweise aus einem Schaummaterial mit einer Dicke von 2 bis 20 mm, vorzugsweise von 5 bis 10 mm, gebildet ist und die bevorzugt eine Stauchhärte aufweist, die geringer als diejenige Stauchhärte des Polsterkerns 1 ist, wird der Druck verteilt und gleichmäßig auf die Fläche des darunter liegenden Drucksensors 7 aufgebracht. Irgendwelche Unstetigkeiten in dem Material des Polsterkerns 1 werden durch diese erste Zwischenlage 5 ausgeglichen. Die Lagerplatte 8 stützt dabei den Drucksensor 7 ausreichend ab und ist folglich aus einem entsprechend steifen Material gebildet, das den darauf ausgeübten Kräften in dem erforderlichen Maß standhält. Bevorzugt ist die Lagerplatte 8 auch aus einem Kunststoffmaterial aufgebaut.

Die Ausführungsform, wie sie in Figur 2 gezeigt ist, weist gegenüber der Ausführungsform der Figur 1 eine weitere Zwischenlage 11 auf, die zwischen die erste Zwischenlage 5 und der Bodenfläche 6 der Aussparung 2 eingefügt ist. Diese zweite Zwischenlage 11 sollte eine Dicke im Bereich von 1 mm bis 10 mm, vorzugsweise von 2 mm bis 5 mm, aufweisen. Auch diese Zwischenlage 11 ist frei in der Aussparung 2 senkrecht zu der Bodenfläche 6 des Polsterkerns 1 bewegbar. Im Gegensatz zu der ersten Zwischenlage 5 sollte die zweite Zwischenlage 11 formstabil sein bzw. sie sollte formstabiler oder steifer als die erste Zwischenlage 5 sein. Diese zweite Zwischenlage 11 ist bevorzugt aus einem Kunststoffmaterial gebildet. Dadurch, dass die erste Zwischenlage 5 und die zweite Zwischenlage 11 unterschiedliche Steifigkeiten bzw. Stauchhärten aufweisen, wird der Effekt, der anhand der ersten Zwischenlage 5 in Verbindung mit Figur 1 beschrieben wurde, noch erhöht. Dies bedeutet, dass der durch den Polsterkern 1 ausgeübte Druck noch gleichmäßiger auf den Drucksensor 7 übertragen wird, wodurch das Auslöseverhalten des Drucksensors 7 verbessert wird.

Die beiden Zwischenlagen 5 und 11 können aus einem Materialstück mit einem entsprechenden Gradienten der Stauchhärte gefertigt sein.

Während die Lagerplatte 8 in den beiden in den Figuren 1 und 2 dargestellten Ausführungsformen mit den beiden Flanschabschnitten 9 an der Unterseite 3 des Polsterkerns 1 gehalten sind, könnte diese Lagerplatte 8 auch nur in die Aussparung 2 eingelassen werden, wozu die beiden Flanschabschnitte 9 entfallen würden. In einem solchen Fall kann dann die Lagerplatte 8 mit ihrem seitlich umlaufenden Rand an den Seitenwänden der Aussparung 2 fest verklebt werden.

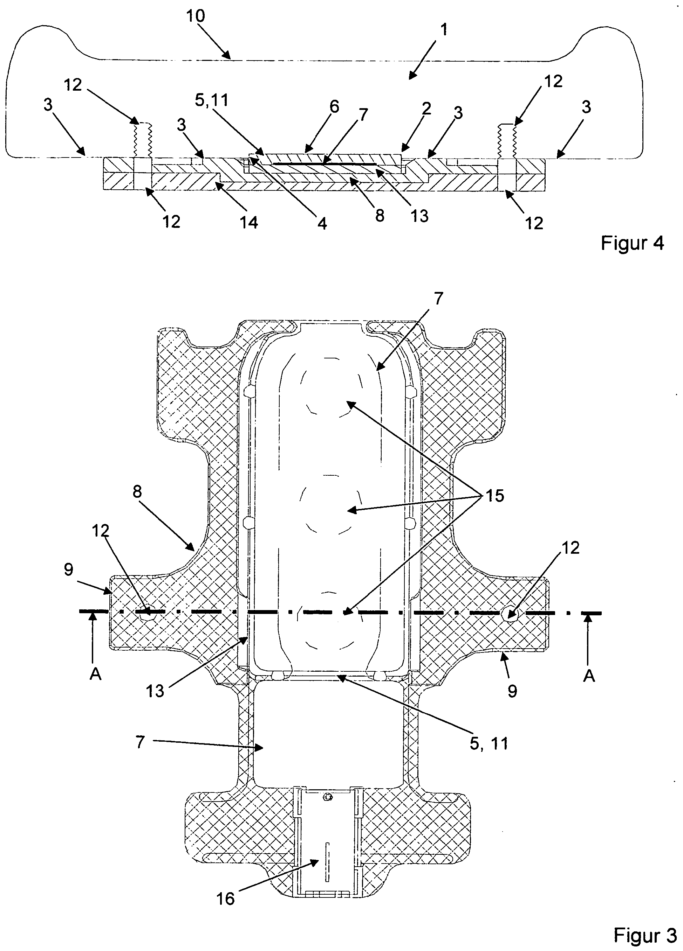

Die Figur 4 zeigt schematisch einen Teil eines Polsterkerns 1, der beispielsweise in den Sitz eines Kraftfahrzeugs integriert ist.

An der Unterseite dieses Polsterkerns 1 befindet sich eine Aussparung 2, die zu der Unterseite 3 des Polsterkerns 1 hin offen (Öffnung 4) ist. In die Aussparung 2 ist über die Öffnung 4 mindestens eine Zwischenlage 5, 11, vorzugsweise beide Zwischenlagen 5 und 11, eingefügt, wie sie auch in der Ausführungsform der Figur 2 gezeigt ist, die auf der Bodenfläche 6 der Aussparung 2 aufliegt.

Auf der der Bodenfläche 6 der Aussparung 2 abgewandten Seite der ersten Zwischenlage 5 oder der weiteren Zwischenlage 11 ist ein Drucksensor 7 aufgelegt. Die Größe des Drucksensors 7 entspricht in etwa der Größe der Bodenfläche 6 der Aussparung 2.

Zwischen der Lagerplatte 8 und dem Drucksensor 7 ist, im Gegensatz zu den Ausführungsformen der Figuren 1 und 2, eine Reaktionsschicht 13 zwischengefügt. Diese Reaktionsschicht 13 ist so dimensioniert, dass sie in etwa der Größe der Zwischenlagen 5, 11 ausgebildet und auf der Lagerplatte 8 positioniert ist. Die Reaktionsschicht 13 dient dazu, die zur Auslösung des Drucksensors 7 benötigte Kraft zu verringern. D.h. ohne diese Reaktionsschicht 13 muss eine höhere Kraft aufgebracht werden, um die gleichen Auslösewerte zu erreichen wie mit Reaktionsschicht 13. Die Reaktionsschicht weist eine Stauchhärte zwischen 10 und 100 kPa, vorzugsweise zwischen 40 und 80 kPa, auf.

An die der ersten Zwischenlage 5 abgewandten Seite des Drucksensors 7 legt sich die Lagerplatte 8 an, die somit den Drucksensor 7 abdeckt und hält. An der dem Drucksensor 7 abgewandten Seite der Lagerplatte 8 befindet sich eine Dämmschicht 14. Die Dämmschicht 14 ist mittels doppelseitigen Klebematerials mit der Lagerplatte verbunden. Bevorzugt ist die Dämmschicht 14 mit der Lagerplatte form- und/oder materialschlüssig ausgeführt. Diese Dämmschicht 14 besitzt an ihrem Außenumfang mindestens zwei Flanschabschnitte 9, die sich an die Unterseite 3 des Polsterkerns 1 anlegen. Diese Flanschteile 9 der Dämmschicht 14 sind an der Unterseite 3 des Polsterkerns 1 durch mindestens zwei Befestigungselemente 12 verbunden.

Die Figur 3 zeigt in einer Draufsicht die Drucksensoreinheit, die einen Teil einer Belegungserfassungseinrichtung bildet, die unter oder an einem Polsterkern 1 angeordnet wird, wie dies die Figur 3 zeigt, der beispielsweise in den Sitz eines Kraftfahrzeugs integriert und positioniert ist. Die Figur 4 stellt hierbei einen Schnitt entsprechend der Schnittlinie A-A in Figur 3 dar. Zusätzlich ist in Figur 4 noch der Polsterkern 1 ersichtlich.

Die Drucksensoreinheit der Belegungserfassungseinrichtung besitzt eine Lagerplatte 8, die aus einem im Wesentlichen formstabilen Material, beispielsweise PP oder ABS oder ABS/PC oder PA6.6, oder bevorzugt PA6, gebildet ist. An der Unterseite dieser Lagerplatte 8 befindet sich die Dämmschicht 14, an der sich Positionierungs- und/oder Befestigungselemente 12 befinden, mit denen die Lagerplatte 8 an einem Polsterkern 1 so befestigt werden kann, dass sie sich auch unter wiederholter Benutzung des Sitzes nicht verschiebt oder sich von dem Polsterkern 1 löst. Die Dämmschicht 14 wirkt geräuschdämpfend und ist darüber hinaus noch abriebsfest, so dass sie die Anordnung schützt.

Auf der Oberseite der Lagerplatte 8 ist eine Reaktionsschicht 13 aufgebracht, auf der ein Drucksensor 7 angeordnet ist, der in dem gezeigten Beispiel drei einzelne Sensorelemente 15 umfasst.

Weiterhin ist der Figur 3 zu entnehmen, dass die nicht dargestellten Anschlussleitungen für den Drucksensor 7 durch ein Deckelteil 16 abgedeckt und gesichert gehalten sind.

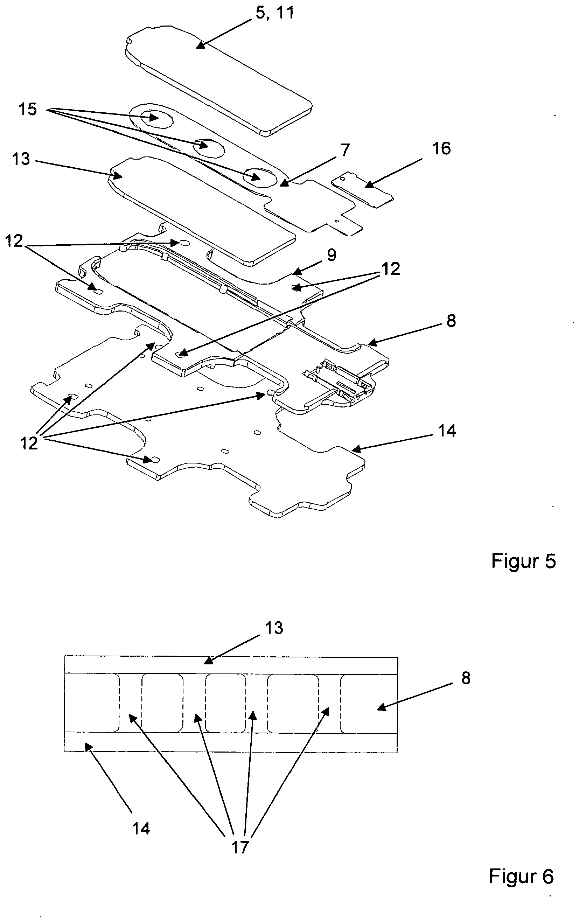

Die Figur 5 zeigt eine Explosionsdarstellung der Figur 3. In dieser Ansicht ist die Dämmschicht 14, die unter der Lagerplatte 8 angeordnet ist, ersichtlich. Die Dämmschicht 14 kann sowohl formschlüssig als auch materialschlüssig mit der Lagerplatte verbunden sein.

Die Figur 6 zeigt eine Teilvergrößerung einer Lagerplatte 8 mit eingelassenen Verbindungskanälen 17, einer Reaktionsschicht 13 und einer Dämmschicht 14. Mittels der Verbindungskanäle 17 in der Lagerplatte 8 ist es möglich, die Reaktionsschicht 13, die Dämmschicht 14 und die Lagerplatte 8 formschlüssig und/oder materialschlüssig als eine Einheit herzustellen.

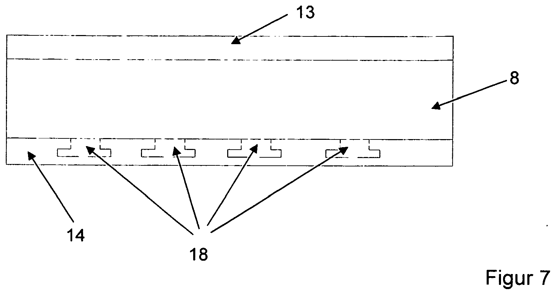

Die Figur 7 zeigt eine Abwandlung der Figur 6. Hierbei sind in der Dämmschicht 14 Öffnungen vorgesehen, durch die es möglich ist, die Dämmschicht 14 mit der Lagerplatte 8 zu verbinden. Dies ist dadurch möglich, dass an der Lagerplatte 8, entsprechend der Geometrie der Öffnungen in der Dämmschicht 14, Kunststoffstege mit Hinterschneidungen 18 vorgesehen sind, die sich in die Dämmschicht 14 einsetzen können. Da das Lagerplattenmaterial steifer oder fester als das Dämmschichtmaterial ist, ist es möglich, die Lagerplatte 8 und die Dämmschicht 14 formschlüssig zu verbinden. Auf der dem Drucksensor 7 abgewandten Seite der Lagerplatte 8 ist die Reaktionsschicht 13 angeordnet. Zur Befestigung der Reaktionsschicht 13 mit oder auf der Lagerplatte 8 kann Klebematerial verwendet werden. Auch ist es möglich, die Reaktionsschicht 13 schwimmend auf der Lagerplatte anzuordnen; die Reaktionsschicht 13 wird dann durch den Klemmdruck der Befestigungselemente 12 gegen das Polstermaterial gehalten.

## Patentansprüche

1. Belegungserfassungseinrichtung zum Detektieren des Belegungszustandes eines Kraftfahrzeugsitzes mit einem Polsterkern (1) und mit einem Foliendrucksensor (7), der in einer Aussparung (2) an der einem Sitzenden abgewandten Unterseite des Polsterkerns (1) angeordnet ist, wobei die Aussparung (2) eine Bodenfläche (6) mit einer Größe aufweist, die mindestens der Größe des Foliendrucksensors (7) entspricht, und wobei der Foliendrucksensor (7) durch eine Lagerplatte (8) abgedeckt gehalten ist, wobei zwischen Bodenfläche (6) der Aussparung (2) und dem Foliendrucksensor (7) mindestens eine Zwischenlage (5) eingelegt ist, wobei die Zwischenlage aus einem reversibel verformbaren und im Wesentlichen homogen strukturierten Material besteht, und **dadurch gekennzeichnet, dass** die Zwischenlage an ihren Rändern vom eigentlichen Polsterkern (1) entkoppelt ist.

2. Belegungserfassungseinrichtung nach Anspruch 1, **dadurch gekennzeichnet, dass** die mindestens eine Zwischenlage (5) aus einem Schaummaterial gebildet ist.

3. Belegungserfassungseinrichtung nach Anspruch 1 oder 2, **dadurch gekennzeichnet, dass** die Stauchhärte der mindestens einen Zwischenlage (5) höher ist als diejenige des Polsterkerns (1).

4. Belegungserfassungseinrichtung nach einem der Ansprüche 1 bis 3, **dadurch gekennzeichnet, dass** die mindestens eine Zwischenlage (5) senkrecht zur Bodenfläche (6) der Aussparung (2) frei bewegbar ist.

5. Belegungserfassungseinrichtung nach einem der Ansprüche 1 bis 4, **dadurch gekennzeichnet, dass** zwischen der Bodenfläche (6) der Aussparung (2) und der mindestens ersten Zwischenlage (5) eine zweite Zwischenlage (11) eingelegt ist.

6. Belegungserfassungseinrichtung nach einem der Ansprüche 1 bis 5, **dadurch gekennzeichnet, dass** die Stauchhärte der mindestens einen Zwischenlage (5) einen Gradienten in Richtung senkrecht zur Bodenfläche (6) derart aufweist, dass sie zur Bodenfläche hin zunimmt.

7. Belegungserfassungseinrichtung nach einem der Ansprüche 1 bis 6, **dadurch gekennzeichnet, dass** die Lagerplatte (8) im Randbereich mit dem Polsterkern (1) verbunden ist.

8. Belegungserfassungseinrichtung nach einem der Ansprüche 1 bis 7, **dadurch gekennzeichnet, dass** die Lagerplatte (8) in die Aussparung (2) eingelassen ist.

9. Belegungserfassungseinrichtung nach einem der Ansprüche 1 bis 8, **dadurch gekennzeichnet, dass** an der Lagerplatte (8) auf der dem Foliendrucksensor (7) abgewandten Seite mindestens eine Dämmschicht (14) aus einem Material angeordnet ist, das weicher ist als das Material der Lagerplatte (8).

10. Belegungserfassungseinrichtung nach Anspruch 9, **dadurch gekennzeichnet, dass** die Lagerplatte (8) und die Dämmschicht (14) aus einem Stück gefertigt sind.

11. Belegungserfassungseinrichtung nach einem der Ansprüche 1 bis 10, **dadurch gekennzeichnet, dass** zwischen Lagerplatte (8) und Foliendrucksensor (7) eine Reaktionsschicht (13) zwischengefügt ist.

12. Belegungserfassungseinrichtung nach Anspruch 11, **dadurch gekennzeichnet, dass** die Reaktionsschicht (13), die Dämmschicht (14) und die Lagerplatte (8) formschlüssig und/oder materialschlüssig als eine Einheit ausgebildet sind.

## Claims

1. Occupation detection device for detecting the occupation state of a motor vehicle seat with an upholstery core (1) and with a film pressure sensor (7) which is arranged in a recess (2) on the underside of the upholstery core (1) facing away from a seat end, the recess (2) having a bottom surface (6) with a size which corresponds at least to the size of the film pressure sensor (7), and wherein the film pressure sensor (7) is held covered by a bearing plate (8), wherein at least one intermediate layer (5) is inserted between the bottom surface (6) of the recess (2) and the film pressure sensor (7), wherein the intermediate layer consists of a reversibly deformable and substantially homogeneously structured material, and **characterized in that** the intermediate layer is decoupled at its edges from the actual upholstery core (1).

2. Occupation detection device according to claim 1, **characterized in that** the at least one intermediate layer (5) is formed from a foam material.

3. Occupation detection device according to claim 1 or 2, **characterized in that** the compression hardness of the at least one intermediate layer (5) is higher than that of the upholstery core (1).

4. Occupation detection device according to any one of claims 1 to 3, **characterized in that** the at least one intermediate layer (5) is freely movable perpendicular to the bottom surface (6) of the recess (2).

5. Occupation detection device according to any one of claims 1 to 4, **characterized in that** a second intermediate layer (11) is inserted between the bottom surface (6) of the recess (2) and the at least first intermediate layer (5).

6. Occupation detection device according to any one of claims 1 to 5, **characterized in that** the compression hardness of the at least one intermediate layer (5) has a gradient in the direction perpendicular to the bottom surface (6) in such a way that it increases towards the bottom surface.

7. Occupation detection device according to any one of claims 1 to 6, **characterized in that** the bearing plate (8) is connected to the upholstery core (1) in the edge region.

8. Occupation detection device according to any one of claims 1 to 7, **characterized in that** the bearing plate (8) is inserted into the recess (2).

9. Occupation detection device according to any one of claims 1 to 8, **characterized in that** at least one insulating layer (14) of a material which is softer than the material of the bearing plate (8) is arranged on the bearing plate (8) on the side facing away from the film pressure sensor (7).

10. Occupation detection device according to claim 9, **characterized in that** the bearing plate (8) and the insulating layer (14) are made of one piece.

11. Occupation detection device according to any one of claims 1 to 10, **characterized in that** a reaction layer (13) is interposed between bearing plate (8) and film pressure sensor (7).

12. Occupation detection device according to claim 11, **characterized in that** the reaction layer (13), the insulating layer (14) and the bearing plate (8) are formed as one unit in a form-fitting and/or material-fitting manner.

## Revendications

1. Dispositif de détection d'occupation pour la détection de l'état d'occupation d'un siège de véhicule automobile avec un noyau de rembourrage (1) et avec un capteur de pression à feuille (7), qui est disposé dans un évidement (2) sur la face inférieure du noyau de rembourrage (1) opposée à une personne assise, dans lequel l'évidement (2) présente une surface de fond (6) avec une grandeur qui correspond au moins à la grandeur du capteur de pression à feuille (7), et dans lequel le capteur de pression à feuille (7) est retenu recouvert par une plaque d'appui (8), dans lequel au moins une couche intermédiaire (5) est insérée entre la surface de fond (6) de l'évidement (2) et le capteur de pression à feuille (7), dans lequel la couche intermédiaire est constituée d'un matériau déformable de manière réversible et structuré de manière sensiblement homogène, et **caractérisé en ce que** la couche intermédiaire est découplée, sur ses bords, du noyau de rembourrage (1) proprement dit.

2. Dispositif de détection d'occupation selon la revendication 1, **caractérisé en ce que** la au moins une couche intermédiaire (5) est formée d'un matériau en mousse.

3. Dispositif de détection d'occupation selon la revendication 1 ou 2, **caractérisé en ce que** la résistance à la compression de la au moins une couche intermédiaire (5) est supérieure à celle du noyau de rembourrage (1).

4. Dispositif de détection d'occupation selon l'une quelconque des revendications 1 à 3, **caractérisé en ce que** la au moins une couche intermédiaire (5) peut se déplacer librement perpendiculairement à la surface de fond (6) de l'évidement (2).

5. Dispositif de détection d'occupation selon l'une quelconque des revendications 1 à 4, **caractérisé en ce qu'**une deuxième couche intermédiaire (11) est insérée entre la surface de fond (6) de l'évidement (2) et la au moins une première couche intermédiaire (5).

6. Dispositif de détection d'occupation selon l'une quelconque des revendications 1 à 5, **caractérisé en ce que** la résistance à la compression de la au moins une couche intermédiaire (5) présente un gradient dans une direction perpendiculaire à la surface de fond (6), de telle sorte qu'elle augmente en direction de la surface de fond.

7. Dispositif de détection d'occupation selon l'une quelconque des revendications 1 à 6, **caractérisé en ce que** la plaque d'appui (8) est reliée au noyau de rembourrage (1) dans la zone de bord.

8. Dispositif de détection d'occupation selon l'une quelconque des revendications 1 à 7, **caractérisé en ce que** la plaque d'appui (8) est encastrée dans l'évidement (2).

9. Dispositif de détection d'occupation selon l'une quelconque des revendications 1 à 8, **caractérisé en ce qu'**au moins une couche isolante (14) composée d'un matériau qui est plus souple que le matériau de la plaque d'appui (8) est disposée sur la plaque d'appui (8) sur la face opposée au capteur de pression à feuille (7).

10. Dispositif de détection d'occupation selon la revendication 9, **caractérisé en ce que** la plaque d'appui (8) et la couche isolante (14) sont fabriquées d'une seule pièce.

11. Dispositif de détection d'occupation selon l'une quelconque des revendications 1 à 10, **caractérisé en ce qu'**une couche réactionnelle (13) est intercalée entre la plaque d'appui (8) et le capteur de pression à feuille (7).

12. Dispositif de détection d'occupation selon la revendication 11, **caractérisé en ce que** la couche réactionnelle (13), la couche isolante (14) et la plaque d'appui (8) sont réalisées en tant qu'unité par coopération de formes et/ou par complémentarité de matières.
